Europäisches Patentamt

(19) European Patent Office

Office européen des brevets

(11) Numéro de publication : **0 194 285**
**B1**

(12) **FASCICULE DE BREVET EUROPÉEN**

(45) Date de publication du fascicule du brevet :
28.03.90

(21) Numéro de dépôt : **85904463.8**

(22) Date de dépôt : **12.09.85**

(86) Numéro de dépôt international :
**PCT/FR 85/00246**

(87) Numéro de publication internationale :
**WO/86017 (27.03.86 Gazettee 86/07)**

(51) Int. Cl.⁵ : **B 62 D 53/08**, B 60 P   3/32

(54) **REMORQUE NOTAMMENT POUR LE CAMPING.**

(30) Priorité : 13.09.84 FR 8414076
16.01.85 FR 8500606

(43) Date de publication de la demande :
17.09.86 Bulletin 86/38

(45) Mention de la délivrance du brevet :
28.03.90 Bulletin 90/13

(84) Etats contractants désignés :
BE DE FR GB NL

(56) Documents cités :
FR--A-- 2 440 307
GB--A-- 2 129 750
US--A-- 4 452 465

(73) Titulaire : **MORIN, André Michel Robert**
**67, rue Alfred de Vigny**
**F-53000 Laval (FR)**

(72) Inventeur : **MORIN, André Michel Robert**
**67, rue Alfred de Vigny**
**F-53000 Laval (FR)**

## Description

La présente invention concerne une remorque notamment pour le camping, comportant un moyen d'attelage, pour être accrochée à un véhicule automobile, remorque comportant une partie avant prolongée au-dessus du toit du véhicule automobile du type défini dans le préambule de la revendication 1, qui est déjà connu par le document GB-A-2129750.

On connaît déjà des remorques de ce type, destinées à être accrochées derrière un véhicule automobile, et qui débordent par dessus le pavillon du véhicule. Les remorques connues ont en commun le fait que leur accorchage se fait d'une part au crochet d'accrochage habituel de remorque du véhicule automobile, c'est-à-dire au dispositif généralement constitué par un crochet terminé par une boule formant une liaison par rotule, et d'autre part, en un ou deux points d'accrochage à l'avant du pavillon du véhicule.

Il est ainsi connu (FR-A-2440307) de relier la remorque par un attelage en trois points au véhicule, à savoir :

— le point d'accrochage habituel d'une remorque,

— deux points d'accrochage latéraux, de chaque côté de la voiture, de façon à assurer un assemblage rigide entre la remorque et le véhicule.

Il est également connu (FR-A-2359008) de ne relier la remorque qu'en un seul point au véhicule.

Le brevet GB-A-1 332 203 décrit une solution assez semblable d'accrochage d'une remorque à un véhicule, à savoir :

— un point d'appui de la remorque coulissant sur le toit du véhicule tracteur,

— un point d'accrochage de la remorque combiné avec un système de débattement, à l'arrière du véhicule automobile.

L'intérêt de ces solutions résiderait dans la souplesse d'utilisation du véhicule automobile et de la remorque, d'une part sur route ou dans les passages d'obstacles, ou d'autre part, une fois la remorque détellée rapidement, en utilisant le véhicule automobile de façon habituelle sans avoir l'inconvénient, comme dans un véhicule de camping motorisé, d'une charge et d'un encombrement important.

Dans toutes ces remorques, selon l'art antérieur, le but recherché est celui de réaliser la synthèse entre une remorque habituelle de type caravane de camping, et un véhicule de camping motorisé facile à manœuvrer.

Toutes les solutions connues présentent le grave inconvénient de ne pas satisfaire à la réglementation routière de la remorque ou de transformer l'ensemble du véhicule automobile-remorque en un attelage de type « semi-remorque » ou en un attelage rigide à trois essieux, et de se désaccoupler du véhicule tracteur avec difficulté.

La solution d'un attelage de type « semi-remorque avec accrochage unique sur le toit du véhicule, est une solution séduisante en théorie mais en pratique elle est difficilement réalisable car le pavillon d'une voiture ne permet pas de recevoir les efforts d'appui et de traction pour tirer la remorque.

Dans le cas d'un attelage rigide, on rencontre les difficultés puisque un tel attelage doit suivant les réglementations des différents pays, recevoir l'agrémentation de l'autorité compétente. Cela se traduit par des procédures administratives complexes, incompatibles avec la diffusion d'un tel attelage ou d'une telle remorque.

Par ailleurs, l'utilisation d'un tel attelage rigide est relativement délicate et la conduite du véhicule devient difficile du fait de cette rigidité, qu'il s'agisse de la conduite sur route ou pour passer des obstacles tels que les dénivellations qui peuvent exister sur les routes (travaux, ornières etc...)

Suivant le cas, la remorque alors en porte-à-faux est portée par le véhicule.

La présente invention a pour but de remédier à ces inconvénients et se propose de créer une remorque au sens traditionnel du terme permettant une conduite sur routes et pour le passage d'obstacles aussi simplement qu'avec une remorque traditionnelle, sans avoir besoin de fixer à l'arrière du véhicule tracteur, aucun autre moyen d'accrochage que l'un des moyens usuels, couramment commercialisés, satisfaisant ainsi à la réglementation routière en matière de remorque, et conservant une possibilité de désaccouplement très rapide avec le véhicule automobile. Pour atteindre ce but, la remorque est caractérisée par la partie caractérisante de la revendication 1.

Le moyen d'accrochage est de préférence situé dans le plan médian ou plan de symétrie (plan longitudinal) de la remorque, de façon que ce moyen d'accrochage porté par la remorque puisse être relié à l'organe d'accrochage, complémentaire, usuel, du véhicule automobile.

Cet organe d'accrochage complémentaire est en général constitué par un crochet à boule formant pour les remorques habituelles une liaison à rotule. Dans le cas présent, le moyen d'accrochage de la remorque est simplement conformé de cette manière pour pouvoir s'adapter à l'organe d'accrochage déjà existant sur le véhicule ou encore qui existe dans le commerce et peut être monté de façon traditionnelle sur le châssis du véhicule.

La fonction d'accrochage pour la traction de la remorque est ainsi combinée à la fonction de débattement permettant aux roues du véhicule automobile de passer sur des obstacles sans pour autant soulever la remorque ou inversement, comme cela est par exemple, le cas lorsqu'on fait monter au véhicule une bordure de trottoir ou lors du passage d'une dénivellation par exemple un caniveau ou sur un chantier routier.

Le moyen d'appui avant qui est de préférence fixé à l'extrémité du prolongement de la remorque au-dessus du toit du véhicule, autorise le fonctionnement de l'organe de débattement pour permettre le débattement de la remorque par rapport au véhicule. Sans cet appui avant, il serait nécessaire de prévoir en plus de l'organe de débattement un moyen recevant le couple exercé par la remorque au niveau de l'organe d'accrochage. Une telle réalisation serait complexe et surtout incompatible avec l'objectif fixé dans le cadre de la présente invention.

Le moyen d'appui avant n'a pour fonction que de recevoir les très faibles efforts exercés par la remorque. Ces efforts sont faibles, d'une part, à cause du faible poids de la remorque et d'autre part, du bras de levier important par rapport à l'essieux de la remorque.

De tels efforts peuvent facilement être absorbés par l'organe d'appui complémentaire porté par le toit du véhicule.

Une autre caractéristique de l'invention a pour but de développer la réalisation du moyen d'appui avant entre la remorque et le véhicule, en créant une solution particulièrement simple facilitant l'attelage et permettant également de réaliser un certain jeu entre le véhicule et la remorque pour faciliter des manœuvres notamment les manœuvres de parking et pour accéder au coffre de la voiture.

Le moyen d'attelage selon l'invention permettant le débattement entre la remorque et le véhicule automobile, facilite considérablement la conduite du véhicule du fait de la souplesse de cet attelage permettant d'absorber tant sur route que pour les manœuvres ou la circulation au ralenti toutes les dénivellations toutes les secousses, etc...

Comme de plus, le moyen d'appui ne transmet aucun effort de traction, il n'y a pas d'effort d'arrachement exercé sur le pavillon mais simplement des forces verticales et latérales auxquelles peut résister facilement et sans dommage le pavillon de véhicule.

Suivant une autre caractéristique de l'invention l'organe d'appui, solidaire de la remorque, est constitué par un support muni d'un trou, d'une certaine dimension coopérant avec une clé susceptible de fermer au moins partiellement le trou, et l'organe d'appui complémentaire porté par le véhicule a une tête susceptible de passer à travers le trou du support de la remorque alors que le corps reliant cette tête au véhicule a une section réduite pour permettre la mise en place de la clé, solidarisant les deux organes d'appui.

Ces caractéristiques permettent de solidariser de façon particulièrement pratique l'organe d'appui de la remorque à l'organe d'appui du véhicule puisque le trou du support peut être suffisamment grand pour permettre d'emmancher le support par dessus la tête de l'organe d'appui du véhicule sans nécessiter une mise en place extrêmement précise de la remorque par rapport au véhicule, ou inversement. Cela est important, notamment lorsque la remorque et le véhicule ne se trouvent pas sur une route ou un emplacement de parking à surface très plane.

La clé assure en fait la liaison proprement dite entre les deux organes d'appui ; lorsque cette clé est en place, les deux organes d'appui ne peuvent être séparés l'un de l'autre.

Suivant une autre caractéristique, la tête a une forme de révolution notamment une forme de cône et le trou du support est circulaire. Cette forme de révolution ne nécessite pas d'orientation précise ou d'alignement entre le véhicule et la remorque. Comme de plus, la tête a une forme conique, elle facilite la mise en place du support par dessus la tête, même lorsque le trou touche la tête par l'un de ses bords.

Suivant une autre caractéristique, la clé est constituée par une fourche à deux branches séparées d'une distance inférieure à celle de la plus grande dimension de la tête mais supérieure à la plus grande dimension du corps. Cette forme de fourche a l'avantage de fermer le trou du support de façon plus régulière que si ce trou n'était fermé que d'un côté, ou encore par l'arrière ou par l'avant.

En d'autres termes, cela ne diminue pas la solidité du support et permet d'avoir un trou plus grand alors que le trou et/ou la clé, ainsi que la tête, sont des pièces particulièrement sollicitées dans la liaison entre le véhicule et la remorque.

Suivant une autre caractéristique, la clé est solidaire d'une tige pivotante portée par la remorque. Ce mouvement de pivotement est un mouvement particulièrement pratique. Pour tenir compte de la géométrie de l'assemblage, il est dans ce cas avantageux que les branches venant coiffer le trou du support, soit en forme d'arc de cercle, par exemple centré sur l'axe de pivotement de la tige portant la clé proprement dite.

Suivant une autre caractéristique, le support est constitué par une plaque munie d'une découpe longitudinale de largeur inférieure à celle de la tête et supérieure à celle du corps et communiquant avec le trou pour former une glissière. Dans ce cas, il faut que la clé libère l'accès à la glissière. Cela permet ainsi à l'organe d'appui du véhicule de se déplacer dans la glissière. En d'autres termes, cela permet un mouvement relatif entre le véhicule et la remorque. Ce mouvement relatif est particulièrement intéressant lorsque la remorque et le véhicule sont en position de parking, pour permettre l'accès à l'arrière du véhicule, notamment au coffre. Suivant la réalisation de la remorque, cela permet également d'accéder à la remorque par une porte située entre le véhicule et la remorque.

De façon particulièrement avantageuse, la tête et le corps de l'organe d'appui du véhicule ont une forme de champignon et sont réalisés au moins partiellement en un matériau relativement élastique, par exemple une ossature en acier revêtue de caoutchouc de façon à amortir les vibrations et déformations dues au jeu et aux changements de plan intervenant entre l'organe d'appui de la remorque et celui du véhicule.

Enfin, il est clair que les modes de réalisation des organes d'appui décrits ci-dessus sont réversibles, c'est-à-dire que l'organe d'appui de la remorque peut être la tête et l'organe d'appui du véhicule, le support muni du trou et de la fente formant glissière.

Dans ces conditions, la remorque est bien attelée au sens technique et juridique du terme, à la manière d'une remorque traditionnelle et correspondant à la réglementation en vigueur, ce qui facilite son utilisation et sa diffusion.

Par ailleurs, comme le moyen d'attelage entre la remorque et le véhicule est particulièrement compact, il permet de rapprocher très étroitement la remorque du véhicule, ce qui est très avantageux sur le plan de la résistance à l'air, notamment si la remorque comporte un prolongement avant, caréné.

Il est toutefois à noter que la remorque pourrait se limiter à une remorque, haute, mais de forme traditionnelle, et qui serait prolongée au-dessus du toit de véhicule par un bras portant l'organe d'appui du moyen d'appui avant.

Il est particulièrement avantageux que l'organe de débattement soit constitué par un rail non horizontal solidaire de la remorque et d'un chariot mobile dans le rail et portant l'organe d'accrochage de la remorque.

De façon habituelle, il est avantageux que le rail soit très incliné par rapport à la direction horizontale de façon à réduire la longueur de rail nécessaire au débattement et par suite d'arriver à un moyen d'attelage compact permettant de rapprocher au maximum la remorque du véhicule.

Suivant un mode de réalisation particulièrement avantageux, le rail est formé de deux parties à section en forme de U, dont l'ouverture est tournée l'une vers l'autre, le chariot se compose de deux paires de galets mobiles dans les parties de rail en U, ces galets portant l'organe d'accrochage de la remorque.

Cette réalisation est particulièrement simple, robuste et fiable.

Suivant une caractéristique particulière, le rail est droit. Dans ces conditions, les mouvements de débattement de la remorque se traduisent par de légères translations entre la remorque et le véhicule au niveau de l'organe d'appui avant. Cette réalisation offre l'avantage de la simplicité.

Sur le plan théorique et pour éviter ces légers mouvements de translation, il est intéressant que le rail soit courbé en arc de cercle, dont le centre de courbure correspond sensiblement au moyen d'appui avant.

Suivant une autre caractéristique de l'invention, l'organe d'appui de la remorque est une pièce relativement souple portée par deux pattes et l'organe d'appui du véhicule est une pièce recourbée en forme de crochet, dont la largeur est inférieure à l'écartement des deux pattes et dont l'ouverture correspond sensiblement à l'épaisseur de la pièce relativement souple, de façon à recevoir celle-ci pour en assurer le blocage souple dans la direction verticale et dans la direction transversale.

La pièce relativement souple de l'organe d'appui peut être constituée par un galet en caoutchouc souple ou une boule en caoutchouc souple, venant se loger dans l'ouverture du crochet constituant l'organe d'appui. Comme la branche libre de cet organe d'appui en forme de crochet vient se loger entre les pattes portant la pièce relativement souple, cette liaison qui n'a pas à transmettre d'effort dans la direction longitudinale de l'équipage véhicule/remorque, assure la stabilisation verticale et transversale du moyen d'appui avant.

On a une réalisation particulièrement avantageuse si l'organe d'appui complémentaire du moyen d'appui avant comporte une barre munie de moyens de fixation destinés à être fixés dans les gouttières ou analogues du pavillon du véhicule. Cela permet d'enlever facilement cet organe d'appui du véhicule, lorsque celui-ci ne tracte pas la remorque et de l'adapter à chaque type de véhicule.

De façon générale, l'ensemble formé par le véhicule et la remorque présente des caractéristiques techniques excellentes notamment pour la tenue de route, l'encombrement. Cet ensemble est d'une maniabilité très bonne tant en marche avant qu'en arrière. Lors du freinage, cet attelage joue parfaitement son rôle et ne crée pas d'effet préjudiciable au bon freinage.

Sur le plan de la sécurité, comme la liaison entre le véhicule et la remorque n'est pas rigide en hauteur, cela permet d'absorber les dénivellations, la tenue de route de l'ensemble est excellente tant en ligne droite qu'en virage, qu'en devers d'un véhicule l'un par rapport à l'autre.

Enfin, lorsque la remorque est détachée du véhicule, le véhicule peut s'utiliser normalement sans nécessiter de démontage complexe ou inversement de mise en place de pièces difficiles à fixer.

La présente invention sera décrite plus en détail à l'aide des dessins annexés, dans lesquels :

— la figure 1 est une vue schématique d'une remorque selon l'invention attelée à un véhicule automobile ;

— la figure 2 est une vue en perspective de détail du moyen d'accrochage de la remorque sur l'organe d'accrochage complémentaire du véhicule (crochet à boule) ;

— la figure 3 est une vue de détail en perspective de la phase de mise en place de l'organe d'appui solidaire de la remorque et dans l'organe d'appui porté une barre de type barre de porte-bagages fixée au véhicule ;

— la figure 4 est une vue en perspective qui montre partiellement l'avant de la remorque au niveau d'un autre moyen d'appui formé par l'organe d'appui solidaire de la remorque et l'organe d'appui solidaire du véhicule.

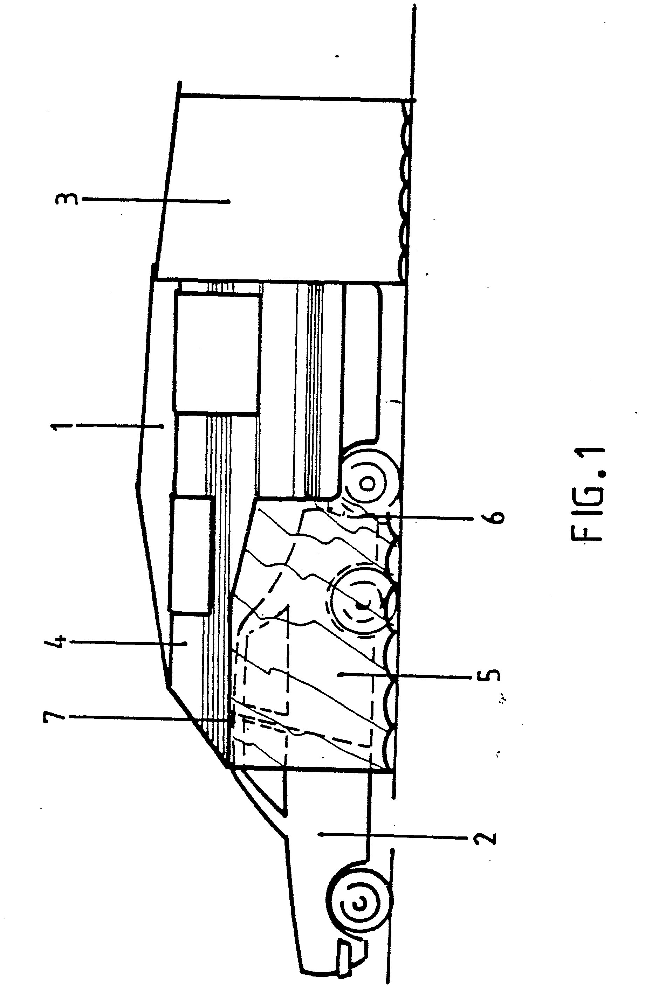

Selon la figure 1, l'invention concerne une remorque 1, notamment une remorque de camping, comportant un moyen d'attelage pour être accroché à un véhicule automobile 2.

La figure 1 montre la remorque 1 et le véhicule 2 en utilisation de camping. La remorque est prolongée à l'arrière par un volume habitable 3 en forme de tente. Le prolongement avant 4 de la remorque 1 porte également un habitacle 5 délimité par une toile de tente. Cet habitacle 5 peut se refermer partiellement sur le véhicule 2. Il est également possible ainsi de dételer le véhicule de la remorque pour utiliser librement le volume 5 ainsi délimité et agrandir l'espace disponible à l'intérieur de cette remorque formant caravane de camping.

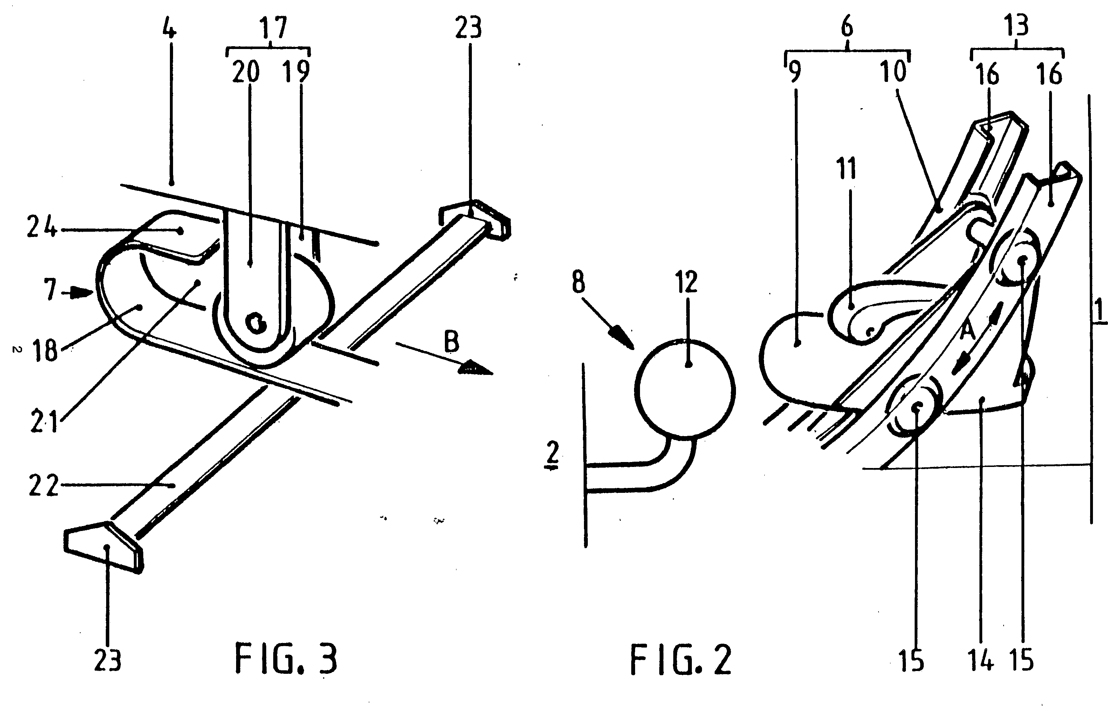

Le moyen d'attelage de la remorque 1 au véhicule automobile 2, se compose d'un moyen d'accrochage 6 et d'un moyen d'appui avant 7. La description d'un moyen d'accrochage 6 et du moyen d'appui avant 7 sera faite ci-après à l'aide des figures 2 et 3.

Selon la figure 2, le moyen d'accrochage 6, solidaire de la remorque 1, est destiné à être relié à l'organe d'accrochage complémentaire 8 solidaire du véhicule automobile 2.

Le moyen d'accrochage 6 se compose d'un organe d'accrochage 9 proprement dit, qui est relié solidairement à l'organe d'accrochage 8 complémentaire du véhicule automobile et d'un organe de débattement 10.

Dans l'exemple représenté à la figure 2, l'organe d'accrochage 9 est constitué par une coupelle munie d'un moyen de verrouillage 11. Cette coupelle 9 vient coiffer la boule 12 de l'organe d'accrochage complémentaire 8 et le moyen de verrouillage non représenté, vient se prendre sous la boule 12 pour solidariser les organes 9 et 8. Pour séparer ces organes 9 et 8, on agit sur le levier 11.

L'organe de débattement 10 se compose d'un rail 13 incliné, solidaire de la remorque 1 (les moyens de liaison n'ont pas été représentés ; il s'agit de pattes ou analogues).

Ce rail reçoit un chariot 14 portant l'organe d'accrochage 9. Le chariot comporte des galets 15 roulant dans le rail 13. En fait, à la figure, le rail 13 est constitué de deux parties 16. Chaque partie 16 est un fer à section en C ou section en U pour retenir et guider les galets 15.

Selon l'exemple représenté aux figures 2 et 3, le rail 13 a une forme d'arc de cercle (ou courbe voisine d'un arc de cercle) dont le centre de courbure correspond au moyen d'appui avant 7.

Le chariot 14 est librement mobile par rapport au rail 13. En d'autres termes, une fois l'accrochage réalisé entre l'organe d'accrochage 9 et l'organe d'accrochage complémentaire 8, 12 solidaire du véhicule, l'organe d'accrochage 9 est solidaire en hauteur de l'organe d'accrochage 8, 12.

Les mouvements relatifs en hauteurs, entre la remorque 1 et le véhicule 2 sont alors absorbés par le mouvement du rail 13 par rapport au chariot 14.

Ce mouvement relatif est indiqué par la double flèche A à la figure 2.

La figure 3 montre un mode de réalisation du moyen d'appui 7.

Ce moyen d'appui avant 7 se compose d'un organe d'appui 17 solidaire de la partie avant 4 de la remorque 1 ainsi que d'un organe d'appui complémentaire 18 relié au toit du véhicule en un point correspondant à celui de l'organe d'appui 17.

Selon la figure 3, l'organe d'appui 17 se compose de deux pattes 19, portant un galet souple 20, susceptible de rouler autour de son axe. L'organe d'appui complémentaire 18 est constitué par un fer plat en forme de crochet dont l'ouverture 21 permet de recevoir le galet souple 20. Cet organe 18 est par exemple relié à une barre 22 qui (figure 3) porte à ses deux extrémités des moyens de fixation 23 permettant la fixation au toit du véhicule à la manière d'une barre de porte-bagage habituel.

L'écartement des deux pattes 19 et le diamètre du galet 20 sont tels que l'organe 17 puisse venir se loger dans l'ouverture 21 du crochet 18. La patte libre 24 du crochet 18 sert alors de retenue élastique coopérant avec le galet 20. Le maintien dans la direction latérale est assuré par la coopération entre les bords latéraux de la patte 24 et les pattes 19, avec possibilité d'inclinaison à gauche ou à droite de la remorque par rapport à la voiture par léger pivotement latéral du galet 20 sur sa base.

Dans la mesure où le moyen d'accrochage 6 comporte un organe de débattement formé par un rail 13 dont le centre de courbure correspond exactement à l'organe d'appui 17 (et par suite à l'ouverture 21 du crochet 18) lors du mouvement relatif du chariot (rail 13) par rapport au rail 13 (chariot 14) il y a un mouvement de rotation autour de l'axe ou du galet 20 si bien qu'il n'y a aucun déplacement notable dans la direction de la double flèche horizontale B au niveau de l'organe d'appui avant 7.

Par contre, si le rail 13 est rectiligne, le déplacement relatif entre les organes 13 et 14 se traduit par une légère translation du galet 20 dans l'ouverture 21 du crochet 18, dans le sens de la double flèche B.

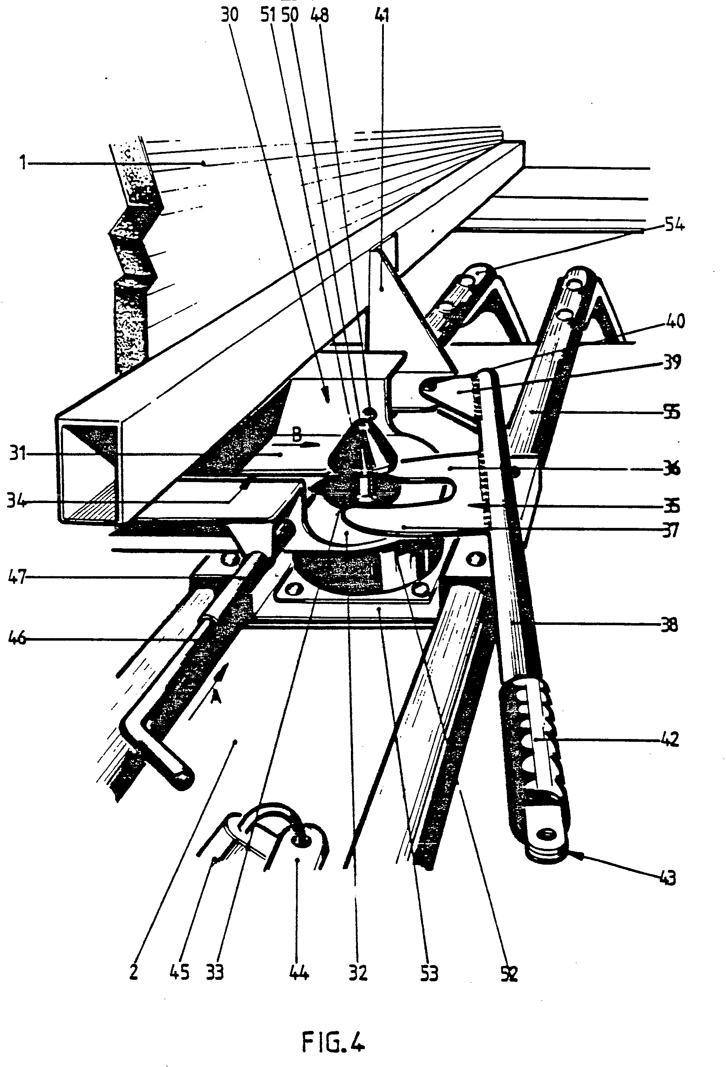

Selon la figure 4, une autre caractéristique de l'invention concerne la réalisation d'un autre moyen d'appui avant entre la remorque 1 et le véhicule 2, qui tous deux ne sont représentés que partiellement.

Ce moyen se compose d'un support 30 en forme de pièce profilée, par exemple la partie avant du châssis de la remorque, dont le fond constitue une plaque 31 terminée à l'avant par un arrondi 32 muni d'un trou 33 circulaire et dont l'arrière comporte une fente 34 formant une glissière comme cela sera expliqué.

Cet organe d'appui porté par la remorque comporte également une clé 35, susceptible de fermer au moins partiellement le trou 33 du support 30. Pour cela, cette clé 35 présente deux branches 36, 37 portées par une tige 38 dont une extrémité est reliée de façon pivotante par une patte 39 et un pivot 40 à un gousset 41 solidaire du support 30 ou de la partie avant de la remorque 1.

L'autre extrémité de la tige 38 se termine par une poignée 42 et une patte à trou 43 permettant de relier cette patte 43 à une patte 44 complémentaire par l'intermédiaire d'un cadenas 45.

La position représentée à la figure correspond à la position d'ouverture ou de libération du trou 33. Dans cette position, la clé 35 ne barre pas le trou 33. Par contre, lorsque la clé 35 est pivotée autour de son pivot 40, les branches 36, 37 de la fourche formant la clé 35 viennent se placer sur le trou 33 pour le fermer partiellement, position dans laquelle le cadenas 45 passe à travers le trou de la patte 43 et celui de la patte 44 bloquant ainsi la tige 38 et la clé 35.

L'organe d'appui, porté par la remorque 1, est complété par un verrou de glissière 46 qui est monté coulissant dans un manchon 47 porté par le support 30 de façon que ce verrou 46 se trouve sensiblement à la jonction de la glissière 34 et du trou 33.

Lorsque le verrou 46 occupe la position représentée à la figure, la communication entre le trou 33 et la glissière 34 est libérée. Par contre, lorsque le verrou de glissière 46 est enfoncé dans le sens de la flèche A de façon que son extrémité vienne dans le logement 48 il barre le passage entre le trou 33 et la glissière 34.

L'organe d'appui complémentaire porté par le véhicule se compose d'une tête de centrage 50, par exemple conique, et un corps 51 de section inférieure à la plus grande section de la tête de centrage. Cette tête et ce corps sont reliés à un bloc 52 lui-même porté par une plaque 53 reliée aux barres de galerie 54, 55 solidaires du véhicule 2.

La tête de centrage 50 et le corps 51 ont une forme de révolution. La plus grande section de la tête de centrage 50 est inférieure à celle du trou 33 de la plaque du support 30.

L'ouverture entre les deux branches 36 et 37 de la clé 35 a une largeur inférieure à la dimension correspondante de la plus grande section de la tête 50 mais supérieure à celle du corps 51 de façon que, lorsque la clé 35 barre le trou 33, elle retienne la tête de centrage. La glissière 34 a une largeur sensiblement analogue à celle de l'écartement des branches 36, 37 de la clé 35 de façon à permettre un mouvement relatif entre l'ensemble 50, 51 porté par le véhicule 2 et le support 30 solidaire de la remorque 1.

Il est à remarquer que les branches 36 et 37 ont une longueur suffisante pour barrer l'ouverture 33 et y bloquer la tête de centrage 50 tout en permettant le passage libre de la tête 50 ou, plus exactement, du corps 51 du trou 33 ainsi barré par la clé 35 vers la glissière 34 et inversement. Cela permet un mouvement relatif (double flèche B) entre le véhicule 2 et la remorque 1. Il est avantageux que la glissière 34 ait une longueur de l'ordre de 20 à 40 cm pour permettre au véhicule 2 d'avancer par rapport à la remorque 1 et de libérer l'accès au coffre arrière du véhicule. (Selon la disposition de la figure, l'avant du véhicule est à droite et il en est de même de l'avant de la remorque).

Dans ces conditions, la distance entre l'arrière du véhicule et la partie correspondante de la remorque est la plus grande lorsque la tête de centrage 50 et le corps 51 se trouvent au niveau du trou 33 alors que la distance est la plus petite lorsque la tête de centrage 50 et le corps 51 sont à l'extrémité gauche de la glissière 31.

Cette glissière permet non seulement l'accès au coffre du véhicule, comme cela a été indiqué ci-dessus, mais également certaines manœuvres tout en autorisant de ne pas séparer complètement la remorque du véhicule.

Dans tous les cas, la réunion entre la remorque et le véhicule se fait par basculement du support 30 de façon à engager le trou 33 par dessus la tête 50 ou coulissement de la tête vers l'avant si le trou est ouvert à l'avant, puis on ferme la clé 35 pour que le support 30 ne puisse plus se dégager de la tête 50. Ce n'est que pour la position de manœuvre dans laquelle il est intéressant que le véhicule et la remorque soient aussi éloignés que possible, que l'on met en place le verrou de glissière 46 pour retenir la tête de centrage 50 et le corps 51 en place dans le trou 3.

Le verrou de glissière 46 n'intervient pratiquement pas dans les conditions de circulation normale puisque le véhicule 2 tirant la remorque 1, le corps 51 portant la tête de centrage 50, est toujours en appui au milieu de la glissière 31. Ce n'est que lors d'un freinage que la remorque peut avoir tendance à avancer par rapport au véhicule et que le corps 51 peut glisser vers l'arrière de la glissière.

Comme déjà indiqué, on peut inverser les organes d'appui du véhicule et de la remorque.

Enfin, il est à noter que la remorque peut être de forme quelconque sous réserve qu'elle comporte un moyen permettant d'avoir le moyen d'appui avant. Il est particulièrement intéressant que le panneau arrière de la remorque soit relevable pour former le toit de la tente 3 et que par ailleurs la remorque comporte une porte de passage à l'avant.

**Revendications**

1. Remorque (1) notamment pour le camping comportant un moyen d'attelage (6), pour être accrochée à un véhicule automobile (2), remorque (1) comportant une partie avant (4) prolongée au-dessus du toit du véhicule automobile (2), le moyen d'attelage se composant :

a) d'un moyen d'accrochage (6) comprenant :

— un organe d'accrochage (9) destiné à être relié à l'organe d'accrochage complémentaire (8, 12) solidaire de l'arrière du véhicule automobile (2)

b) d'un moyen d'appui avant (7) formé :

— d'un organe d'appui (17) solidaire de la remorque en un point éloigné du moyen d'accrochage (6)

— d'un organe d'appui complémentaire (18) porté par le véhicule en un point correspondant à la position de l'organe d'appui (17) solidaire de la remorque (1) l'organe d'appui complémentaire (18) assurant le blocage de l'organe d'appui (17) de la remorque dans la direction transversale et, dans la direction verticale caractérisée en ce que le moyen d'accrochage (6) comprend

— un organe de débattement (10) solidaire de la remorque (1), portant l'organe d'accrochage (9) de la remorque (1) permettant le débattement vertical de la remorque (1) par rapport à son organe d'accrochage (9).

2. Remorque selon la revendication 1 caractérisée en ce que l'organe de débattement (10) est constitué par :

— un rail (13, 16) non horizontal solidaire de la remorque (1)

— un chariot mobile (14) dans le rail (13) et portant l'organe d'accrochage (9) de la remorque (1) ledit rail (13) étant formé de deux parties (16) à section en forme de U, dont l'ouverture est tournée l'une vers l'autre, le chariot (14) se composant de galets (15) mobiles dans les parties de rail en U, ces galets portant l'organe d'accrochage de la remorque, ledit rail (13) pouvant être droit ou courbé en arc de cercle dont le centre de courbure correspond sensiblement au moyen d'appui avant (7).

3. Remorque selon la revendication 1, caractérisée en ce que l'organe d'appui (17) de la remorque (1) est une pièce (20) relativement souple portée par deux pattes (19) et l'organe d'appui (18) du véhicule (2) est une pièce recourbée en forme de crochet, dont la largeur est inférieure à l'écartement des deux pattes (19) et dont l'ouverture (21) correspond sensiblement à l'épaisseur de la pièce (20) relativement souple, de façon à recevoir celle-ci pour en assurer le blocage souple dans la direction verticale et dans la direction transversale et en ce que l'organe d'appui complémentaire du moyen d'appui avant comporte une barre (22) munie de moyens de fixations (23) destinée à être fixés dans les gouttières ou analogues du pavillon du véhicule (1).

4. Remorque selon la revendication 1, caractérisée en ce que l'organe d'appui, solidaire de la remorque (1), est constitué par un support (30) muni d'un trou (33), d'une certaine dimension ouvert ou fermé vers l'avant, coopérant avec une clé (35) susceptible de fermer au moins partiellement le trou (33), et l'organe d'appui complémentaire porté par le véhicule (2) a une tête (50) susceptible de passer à travers le trou (33) du support (30) de la remorque (1), alors que le corps reliant cette tête (50) au véhicule a une section réduite pour permettre la mise en place de la clé (35) solidarisant les deux organes d'appui.

5. Remorque selon les revendications 1 et 4, caractérisée en ce que la tête (50) a une forme de révolution, notamment conique, et le trou (33) du support (30) est circulaire.

6. Remorque selon les revendications 1 et 5, caractérisée en ce que la clé (35) est constituée par une fourche à deux branches (36, 37) séparée d'une distance inférieure à celle de la plus grande dimension de la tête (50) mais supérieure à la plus grande dimension du corps (51).

7. Remorque selon l'une quelconque des revendications 5 à 6 caractérisée en ce que la clé (35) est solidarisée par une tige (38) pivotante (40) portée par la remorque (1).

8. Remorque selon l'une quelconque des revendications 5 à 7 caractérisée en ce que le support (30) est constitué par une plaque (31) munie d'une découpe longitudinale (34) de largeur inférieure à celle de la tête (50) et supérieure à celle du corps (51) et communiquant avec le trou (33) pour former une glissière, ainsi qu'un verrou (46) permettant de barrer ou de libérer l'accès à la glissière (34).

9. Remorque selon l'une quelconque des revendications 5 à 8 caractérisée en ce que la tête (50) et le corps (51) sont solidaires d'une plaque (53) fixée à la carrosserie du véhicule (2), par exemple aux barres de galerie (54, 55).

10. Remorque selon la revendication 9, caractérisée en ce que le corps (51), la tête (50) et au moins une partie du bloc (52) ou de la plaque (53) sont constitués et/ou revêtus d'une couche de matière élastique, par exemple de caoutchouc.

## Claims

1. Towed vehicle for caravanning purposes equipped with a towing device (6) to be hitched on to a motor vehicle (2), towed vehicle (1) comprising a front part (4) extending over the roof of the motor car (2), the towing device being composed of :

a) a coupling device (6) consisting of :

— a coupling element (9) destined to be connected to the complementary coupling element (8, 12) which is integral with the back of the motor vehicle (2)

b) a front bearing device (7) composed of :

— a bearing element (17) which is integral with the towed vehicle in a point not near the coupling device (6)

— a complementary bearing element (18) carried by the vehicle in a point corresponding to the position of the bearing element (17) which is integral with the towed vehicle (1). This complementary bearing element (18) ensures locking of the bearing element (17) of the towed vehicle in transverse direction and is characterized, in vertical direction, by the structure of the coupling device (6) which comprises :

— a clearance element (10) integral with the towed vehicle (1), carrying the coupling element (9) of the towed vehicle (1) allowing vertical clearance of the towed vehicle (1) with respect to its coupling element (9).

2. Towed vehicle according to patent claim 1 characterized by the structure of the clearance element (10) which consists of :

— a non horizontal rail (13, 16) integral with the towed vehicle (1)

— a slide (14) gliding in the rail (13) and carrying the coupling element (9) of the towed vehicle (1). The aforesaid rail (13) is composed of two U-section parts (16) with openings turned towards each other. The aforesaid slide (14) is composed of rollers (15) which move along the U-section rails and carry the coupling element of the towed vehicle. The aforesaid rail (13) may be straight or curved as the arc of a circle the centre of curvature of which approximately corresponds to the front bearing device (7).

3. Towed vehicle according to patent claim 1, characterized by the fact that the bearing element (17) of the towed vehicle (1) is composed of a relatively pliable part carried by two brackets (19), by the fact that the bearing element (18) of the vehicle (2) is composed of a hooklike part, the width of which is smaller than the distance between the two brackets (19) and the opening (21) of which approximately corresponds to the thickness of part (20) which is relatively pliable, so as to take the aforesaid part (20) and to lock it in a non rigid way in vertical and in transverse direction, and by the fact that the complementary bearing element of the front bearing device is composed of a supporting rail (22) equipped with fixing devices (23) destined to be mounted on the gutters or analogous of the top of the vehicle (2).

4. Towed vehicle according to patent claim 1, characterized by the fact that the bearing element, integral with the towed vehicle (1), is composed of a support (30) equipped with a hole (33) of a certain size open or closed at the front end, which cooperates with a key (35) capable of at least partially closing the hole (33), and by the fact that the complementary bearing element carried by the vehicle (2) is composed of a head (50) capable of pushing through the hole (33) of the support (30) of the towed vehicle (1), while the body connecting the aforesaid head (50) to the vehicle has a reduced section to allow lodging of the key (35) thus interlocking the two bearing elements.

5. Towed vehicle according to any of the patent claims 1 and 4, characterized by the conical shape of the head (50), and the circular shape of the hole (33) of the support (30).

6. Towed vehicle according to any of the patent claims 1 and 5, characterized by the fact that the key (35) is composed of a fork with two arms (36, 37) separated by a distance less than the largest dimension of the head (50), but greater than the largest dimension of the body (51).

7. Towed vehicle according to any of the patent claims 5 to 6, characterized by the fact that the key (35) is secured by a pivoting rod (38) carried by the towed vehicle (1).

8. Towed vehicle according to any of the patent claims 5 to 7, characterized by the fact that the support (30) is composed of a plate (31) equipped with a longitudinal cutting (34) of a width less than the width of the head (50) and greater than the width of the body (51) and communicating with the hole (33) so as to constitute a slide, as well as a lock (46) which allows to close or clear access to the slide (34).

9. Towed vehicle according to any of the patent claims 5 to 8, characterized by the fact that the head (50) and the body (51) are integral with a plate (53) mounted on the body of the vehicle (2), for example on the roof rack rails (54, 55).

10. Towed vehicle according to patent claim 9, characterized by the fact that the body (51), the head (50) and at least part of the block (52) or plate (53) are constituted of and/or coated with a layer of elastic material, rubber for example.

**Patentansprüche**

1. Anhänger (1) namentlich für Camping beinhaltend eine Kupplungseinrichtung (6) um an ein Fahrzeug (2) angehängt zu werden, Anhänger (1) beinhaltend ein verlängertes Vorderteil (4) über das Dach des Fahrzeuges (2) ragend, die Kupplungseinrichtung bestehend aus :
   a) einer Anhängevorrichtung (6) beinhaltend :
   — ein Anhängeorgan (9) bestimmt um mit einem zusätzlichen Anhängeorgan (8, 12) am Heck des Fahrzeuges (2) verbunden zu werden.
   b) einer vorderen Abstützvorrichtung (7) aus :
   — einem Abstützorgan (17) am Anhänger an einer bestimmten Stelle der Anhängevorrichtung (6) befestigt
   — einem zusätzlichen Abstützorgan (18) an dem Fahrzeug befestigt an einer Stelle übereinstimmend mit Abstützorgen (17) des anhängers (1), das zusätzliche Abstützorgan (17) garantiert die Blockierung des Abstützorgans (17) des Anhängers in Querrichtung und in Längsrichtung dadurch charakterisiert, dass die Anhängevorrichtung (6) besteht aus :
   — einem Verstellorgan (10) am Anhänger (1), das das Anhängeorgan (9) des Anhängers (2) trägt, um die Verstellung des Anhängers (1) zu seinem Anhängeorgan (9) zu ermöglichen.

2. Anhänger gemäss des Anspruchs 1 dadurch charakterisiert, dass das Verstellorgan (10) sich zusammensetzt aus :
   — einer Schiene (13, 16) nicht waagerecht am Anhänger (1) befindlich
   — einem beweglichen Schlitten (14) in der Schiene (13) das die Anhängevorrichtung (9) des Anhängers (1) trägt, diese Schiene (13) besteht aus zwei Teilen (16) aus U-Profilen, deren Öffnungen gegenüber stehen, der Schlitten (14) beinhaltet Rollen (15), die in der U-förmigen Schiene laufen, diese Schiene (13) kann sowohl gerade als auch kreisbogenförmig sein, deren Kurvenmittelpunkt genau der vorderen Abstützvorrichtung entspricht.

3. Anhänger gemäss Anspruch 1, dadurch charakterisiert, dass das Abstützorgan (17) des Anhängers (1) ein relativ elastisches Teil (20) ist durch zwei Befestigungseisen (19) gehalten und das Abstützorgan (18) ein hakenförmig gebogenes Teil ist, dessen Breite geringer ist als der Abstand der beiden Befestigungseisen (19) und dessen Öffnung (21) genau der Stärke des relativ elastischen Teiles (20) entspricht, zur Aufnahme desselben um eine elastische Blockierung in Längs- und Querrichtung zu gewährleisten, und dass das zusätzliche Abstützorgan der vorderen Abstützvorrichtung ein Quereisen beinhaltet (22) mit Befestigungsvorrichtungen (23) versehen, die an der Dachrinne oder ähnlichem befestigt werden.

4. Anhänger gemäss Anspruch 1, dadurch charakterisiert, dass das Abstützorgan am Anhänger (1) aus einem mit einer Öffnung versehenem Support (30) besteht mit einer bestimmten Abmessung nach vorne offen oder geschlossen, in Zusammenwirkung eines Schlüssels (35) um mindestens teilweise die Öffnung (33) zu verriegeln ; und dem zusätzlichen Abstützorgan des Fahrzeugs (2) mit einem Kopf (50) der durch die Öffnung (33) des Supports (30) des Anhängers (1) passt, während die Basis dieses Kopfes (50) einen verjüngten Querschnitt hat um die Aufnahme des Schlüssels (35) zur Vereinigung der beiden Teile zu gewährleisten.

5. Anhänger gemäss Anspruch 1 und 4, dadurch charakterisiert, dass der Kopf (50) rund ist und namentlich eine konische Form hat und dass die Öffnung (33) des Supports (30) rund ist.

6. Anhänger gemäss Anspruch 1 und 5, dadurch charakterisiert, dass der Schlüssel (35) aus einer Gabel mit zwei Armen (36, 37) geformt ist, deren Abstand geringer ist als die grösste Weite des Kopfes jedoch grösser als die grösste Weite der Basis (51).

7. Anhänger gemäss Anspruch 5 bis 6, dadurch charakterisiert, dass der Schlüssel (35) an einer drehbaren (40) Stange (38) befestigt ist und vom Anhänger getragen wird.

8. Anhänger gemäss Anspruch 5 bis 7, dadurch charakterisiert, dass der Support (30) aus einer Platte (31) besteht mit einem Längsausschnitt (34) mit geringerer Weite als die des Kopfes (50) und grösser als die Basis (51) und mit der Öffnung (33) verbunden um eine Führung zu bilden, sowie einer Verriegelung (46) um den Zugang zu der Führung zu gewährleisten oder zu verhindern.

9. Anhänger gemäss Anspruch 5 bis 8, dadurch charakterisiert, dass der Kopf (50) und die Basis (51) mit einer Platte (53) verbunden sind, und an der Karrosserie des Fahrzeuges (2) z.B. dem Dachgepepäckträger (54, 55) befestigt ist.

10. Anhänger gemäss Anspruch 9, dadurch charakterisiert, dass die Basis (51), der Kopf (50) und wenigstens ein Teil des Blocks (52) oder der Platte (53) aus einem elastischem Material gebildet und/oder überzogen zind, z.B. Kautschuk.

FIG.1

EP 0 194 285 B1

FIG. 3

FIG. 2

EP 0 194 285 B1

**EP 0 194 285 B1**

FIG.4

3